# EUROPEAN PATENT SPECIFICATION

(11) **EP 0 662 787 B1**
(45) Date of publication and mention of the grant of the patent: **19.03.1997**
(21) Application number: 93921860.8
(22) Date of filing: 28.09.1993
(51) Int. Cl.: A23G 1/20, A23G 1/22, A23G 9/18

(54) **PRODUCTION OF CONFECTIONERY**
HERSTELLUNG VON KONFEKT
PRODUCTION D'ARTICLES DE CONFISERIE

(30) Priority: 01.10.1992 EP 92308964
(43) Date of publication of application: 19.07.1995
(73) Proprietor: UNILEVER PLC, London EC4P 4BQ (GB); UNILEVER N.V., 3013 AL Rotterdam (NL)
(72) Inventor: CEBULA, Deryck, Jozef, Bedford MK40 2ND (GB); RAYET, Jaspal, Northampton NN8 3JL (GB)
(74) Representative: Kirsch, Susan Edith
(86) International application number: EP9302626
(87) International publication number: WO9407375

(56) References cited:
- EP-A- 0 017 104
- DE-A- 2 329 172

## Description

### Field of the invention

This invention relates to the production of fat-containing products, eg chocolate products, in which molten fat-containing mass is introduced into a mould. After solidification the product, on removal, replicates the inner surface pattern and configuration of the mould.

### Background to the invention

When preparing fat-containing products using the moulding process it is necessary to obtain the final product in a simple manner by extraction from the mould. The latter after solidification of the fat-containing mass is normally inverted and the moulded product released on to a support surface for further processing. Release from the mould must be efficient to avoid reworking the fat-containing product. The term "chocolate" is used herein generally to include fat based compositions having a chocolate component and extends to couvertures. Such compositions are well characterised in the literature, example are Kirk-Othmer (2nd Edition 1964) at pages 363 et seq and Elements of Food Technology page 579 et seq, and include white chocolate.

### General description of the invention

The present invention provides a process of preparing fat-containing products especially chocolate products by moulding in which (i) fat-containing mass, preferably untempered, at a temperature in the range about 15°C, preferably from about 28°C, to about 55°C and having a fat content of at least about 25% by weight is introduced into a mould having a temperature at or below 0°C, (ii) the fat-containing mass is retained in contact with the mould for a period sufficient to allow the fat-containing mass to solidify in an unstable form at least in the layer in contact with the mould, and (iii) the product is removed from the mould. Usually, in order to ensure all areas of the mould are below 0°C, the mould will be operated at a temperature clearly below 0°C, for example at about -5°C. With usual commercial equipment the lowest temperature achievable is -35°C, but this process can be operated at lower temperatures using specialised plant. Preferably the fat-containing mass contains up to 70% fat, more preferably up to 60%.

The fat-containing product obtained from this process may be solidified by crystallisation so that the fat-containing mass introduced into the mould is all recovered as a bulk final product. Alternatively the solidification may be allowed to take place only in the layer adjacent the mould surface. Inversion of the mould in this latter process allows the remaining molten mass to fall from the mould into a reservoir. The resultant shell then receives an appropriate confectionery filling, for example ice cream, water ice, sorbet, caramel, nougat and mixtures of these fillings.

The shells are particularly suitable for receiving fillings below 0°C because they are formed below this temperature and can thus be handled in a production line without an intermediate cooling stage. Additionally applicants have found the chocolate/ice cream, as an example of a fat-containing mass and a cold filling, contact is particularly good. It is possible this good contact follows from the absence of change in the ice cream structure during filling, in contrast to the surface transformation which may occur when a frozen piece of confectionery is enrobed in a heated chocolate stream or other fat-containing mass.

Preferably the fat-containing material, eg chocolate mass, is not subjected to tempering prior to introduction into the mould. A tempering step is believed to introduce seeds of type IV and V chocolate (β and β¹) into the mass.

The process, by rapidly cooling a chocolate mass in a mould, provides chocolate having an unstable form, usually α, and this provides the improved release. There is no criticality in the material of the mould, for example metal or plastics can be used, but metal is preferred for its heat transfer properties.

Untempered chocolate has the preferred eating quality when used with frozen fillings, eg ice cream. This form of chocolate has a melting temperature in the range 18 to 24°C in comparison with about 33°C for tempered chocolate. The cold moulding process of the present invention is tolerant to variations in chocolate properties and thus formulation of chocolate compositions is more flexible. The cold moulding process requires a shorter period, ca 30 seconds, between adding molten chocolate in a shell moulding process and inverting to remove excess molten chocolate. This compares with about three minutes for an ambient procedure.

The cold moulding process is of particular value with untempered chocolate because the need for tempering plant and consequent process time is eliminated.

The use of cold moulds extends to moulding of fat-containing materials, eg chocolate, using turning or spinning moulds. A spinning mould process time can be considerably reduced using cold moulds. Split moulds are usable in a cold moulding process.

The mould is required to have a temperature below 0°C but at lower temperatures, which are preferred, the chocolate state giving improved release is more quickly attained. Thus preferably the temperature is below -10°C and, more preferably below -20°C.

### Literature:

Fissolo (DE 2329172) describes the formation of a sugar crust in a chocolate based confection containing a liquid filling. The chocolate shell and mould are together cooled below 0°C; the liquid filling is then added and a crust forms on the cold chocolate surface.

### Specific description of the invention

Examples of the process of the invention will now be given to illustrate, but not limit, the invention.

### Example 1

Chocolate containing 43% fat and at a temperature of +45°C was poured into a 5mm thick aluminium mould (suitable for making a bar) maintained at -35°C by cooling with refrigerated air. The mould was held for 5 seconds to allow the chocolate shell to form in the mould; it was then inverted to empty out the remaining liquid chocolate. The chocolate shell was held for a further 1 minute at sub-zero temperature (-35°C) to allow chocolate on the inside of the shell to solidify. The mould was again inverted and the chocolate shell demoulded by applying a small mechanical force on the mould. The chocolate shell demoulded freely.

### Example 2

Example 1 was repeated using mould temperatures of 0°C, -5°C, -10°C, 15°C, -20°C, -30°C and -40°C. The holding time for shell formation was adjusted from 30 seconds to 1 second to maintain constant shell thickness and the holding time was adjusted from 15 minutes to 1 minute to allow the chocolate on the inside of the shell to solidify. The chocolate shell in each sample demoulded freely.

### Example 3

Example 2 was repeated but with plastic moulds prepared from polycarbonate having a thickness of 3 mm. The chocolate shells demoulded freely.

### Example 4

Example 1 was repeated with chocolate fat levels of 32% and 38%. The chocolate shells were demoulded with and without ice cream filling. In both cases, ie. with and without ice cream, the chocolate shells were found to demould readily.

Products produced by this example and chocolate coated ice cream bars produced by enrobing an extruded ice cream bar in a commercial enrober, were subjected to a mechanical test. The product dimensions and the coating thickness for both product were similar. The mechanical test consisted of driving a "wedge" at a control rate through the bar to simulate the "biting" action of the mouth. The behaviour of the coating was recorded. The coating on the enrobed products cracked and fractured randomly and came away from the ice cream. In bars made according to this example, the chocolate coating remained intact. Thus the use of a mould below 0°C also improves the chocolate/ice cream adhesion.

### Example 5

The chocolate shells were formed as in examples 2 and 3, but were not removed from the mould. Ice cream was filled into the shell and hardened at -35°C. Chocolate backing was applied and allowed to set. The filled chocolate was then demoulded by applying a small mechanical force. The filled shells demoulded readily for each sample.

### Example 6

Example 1 was repeated using chocolate at temperatures of 30°C, 35°C, 45°C and 55°C. The chocolate shells were demoulded with and without ice cream filling. In all cases the chocolate shells were found to demould readily.

### Example 7

Example 5 was repeated using the plastic moulds of Example 3. The chocolate shells were demoulded with and without ice cream filling. In all cases the chocolate shells were found to demould readily.

### Example 8

Chocolate containing 43% fat and at a temperature of +45°C was poured into an aluminium mould (5mm thickness) cooled to -35°C by refrigerated air. The mould, consisting of two halves held together by mechanical means and an opening for chocolate, was suitable for producing a 3 dimension totally enclosed product (similar to products produced by book moulding and spinning in the confectionary industry). Chocolate was poured into the mould and when the mould was full, held for 5 seconds for the shell to form. The mould was then inverted to drain the remaining liquid chocolate. The mould was further held for 1 minute at sub zero temperatures ie. -30°C. The two halves of the moulds were then separated. The shell formed was found to demould readily.

### Example 9

Example 8 was repeated with the chocolate dosed and sucked out of the mould using a mechanical doser, ie without inverting. The shell demoulded readily.

### Example 10

Example 8 was repeated except the chocolate shell was filled with ice cream prior to demoulding. The product was found to demould readily.

### Example 11

The shells in examples 2, 3 and 4 were formed using a couverture containing 46% fat (cocoa butter, dairy fat and coconut oil) instead of chocolate. The shells formed were found to demould readily.

### Example 12

In this example a couverture with a fat content of 64% and a crystallisation temperature of 12°C was used. It was based on coconut oil and was lemon flavoured.

Mould temperatures of 0°C, -20°C, and -40°C were used. The couverture at a temperature of 35°C was poured into the moulds and held for a period between 2 and 10 seconds. The moulds were then inverted to empty the mould of liquid couverture and transferred to a blast freezer operating at -35°C for 1 minute. The couverture shells demoulded easily.

### Example 13

Example 12 was repeated using cocoa butter as the fat-containing feedstock to be moulded. The shells demoulded easily.

## Claims

1. A method of preparing chocolate products by moulding in which
(i) a fat-containing mass at a temperature in the range 15°C, preferably from 28°C, to 55°C and having a fat content of at least 25% by weight is introduced into a mould having a temperature of from 0°C to -40°C.
(ii) the fat-containing mass is retained in contact with the mould for a period sufficient to allow the fat-containing mass to solidify in an unstable form at least in the layer in contact with the mould, and
(iii) the fat-containing product is removed from the mould.

2. A method according to claim 1 wherein the fat-containing mass has not been subjected to tempering.

3. A method according to claim 1 or 2 wherein any unsolidified fat-containing mass is removed from the mould prior to removing the product.

4. A method according to any preceding claim wherein the fat-containing product is filled with a filling while retained in the mould.

5. A method according to claim any preceding claim wherein the fat-containing product is filled with a filling below 0°C while retained in the mould at a temperature below 0°C.

6. A method according to any preceding claim wherein the fat-containing mass contains up to 70% be weight fat.

7. A method according to any preceding claim wherein the fat-containing mass is chocolate.

8. A method according to any preceding claim wherein the temperature of the mould is from below 0°C to -35°C.

9. A method according to any preceding claim wherein the mould has a temperature below -10°C.

10. A method according to any preceding claim wherein the mould has a temperature below -20°C.

## Patentansprüche

1. Verfahren zur Herstellung eines Schokoladeprodukts durch Formen, bei welchem
(i) eine fetthaltige Masse bei einer Temperatur im Bereich von 15°C, vorzugsweise 28°C, bis 55°C und mit einem Fettgehalt von zumindest 25 Masse-% in eine Form mit einer Temperatur von 0°C bis -40°C eingebracht wird;
(ii) die fetthaltige Masse mit der Form während eines ausreichenden Zeitraums in Kontakt gehalten wird, um die fetthaltige Masse in einer instabilen Form zumindest in der Schicht in Kontakt mit der Form verfestigen zu lassen; und
(iii) das fetthaltige Produkt aus der Form entfernt wird.

2. Verfahren nach Anspruch 1, bei welchem die fetthaltige Masse keinem Tempern unterworfen wurde.

3. Verfahren nach Anspruch 1 oder 2, bei welchem jegliche nicht-verfestigte fetthaltige Masse aus der Form vor dem Entfernen des Produkts entfernt wird.

4. Verfahren nach einem der vorhergehenden Ansprüche, bei welchem das fetthaltige Produkt mit einer Füllung gefüllt wird, während es in der Form gehalten wird.

5. Verfahren nach einem der vorhergehenden Ansprüche, bei welchem das fetthaltige Produkt mit einer Füllung unter 0°C gefüllt wird, während es in der Form bei einer Temperatur unter 0°C gehalten wird.

6. Verfahren nach einem der vorhergehenden Ansprüche, bei welchem die fetthaltige Masse bis zu 70 Masse-% Fett enthält.

7. Verfahren nach einem der vorhergehenden Ansprüche, bei welchem die fetthaltige Masse Schokolade ist.

8. Verfahren nach einem der vorhergehenden Ansprüche, bei welchem die Temperatur der Form unter 0°C bis -35°C beträgt.

9. Verfahren nach einem der vorhergehenden Ansprüche, bei welchem die Form eine Temperatur unter -10°C hat.

10. Verfahren nach einem der vorhergehenden Ansprüche, bei welchem die Form eine Temperatur unter -20°C hat.

## Revendications

1. Procédé de préparation de produits chocolatés par moulage, dans lequel
(i) on introduit dans un moule ayant une température de 0 à -40°C une masse contenant de la graisse à une température dans la gamme des 15°C, de préférence de 28 à 55°C et ayant une teneur en graisse d'au moins 25% en poids,
(ii) on maintient la masse contenant la graisse en contact avec le moule pendant une période suffisante pour permettre à la masse contenant la graisse de se solidifier sous une forme instable au moins dans la couche en contact avec le moule, et
(iii) on enlève le produit contenant la graisse du moule.

2. Procédé selon la revendication 1, dans lequel la masse contenant la graisse n'est pas soumise au tempérage.

3. Procédé selon la revendication 1 ou 2, dans lequel toute masse contenant de la graisse non solidifiée est enlevée du moule avant d'enlever le produit.

4. Procédé selon l'une quelconque des revendications précédentes, dans lequel le produit contenant la graisse est fourré avec un fourrage pendant qu'il est maintenu dans le moule.

5. Procédé selon l'une quelconque des revendications précédentes, dans lequel le produit contenant la graisse est fourré avec un fourrage en dessous de 0°C pendant son maintien dans le moule à une température en dessous de 0°C.

6. Procédé selon l'une quelconque des revendications précédentes, dans lequel la masse contenant la graisse contient jusqu'à 70% en poids de graisse.

7. Procédé selon l'une quelconque des revendications précédentes, dans lequel la masse contenant de la graisse est du chocolat.

8. Procédé selon l'une quelconque des revendications précédentes, dans lequel la température du moule va de en dessous de 0°C à -35°C.

9. Procédé selon l'une quelconque des revendications précédentes, dans lequel le moule a une température en dessous de -10°C.

10. Procédé selon l'une quelconque des revendications précédentes, dans lequel le moule a une température en dessous de -20°C.
